# EUROPEAN PATENT APPLICATION

(11) **EP 1 202 480 A2**
(43) Date of publication of application: **02.05.2002**
(21) Application number: 01124902.6
(22) Date of filing: 18.10.2001
(51) Int. Cl.: H04B 10/24

(54) **Bidirectional optical fiber communication system, communications apparatus and optical transceiver**

(30) Priority: 30.10.2000 JP 2000331399
(71) Applicant: SONY CORPORATION, Tokyo (JP)
(72) Inventor: Watanabe, Makoto, Shinagawa-ku, Tokyo (JP)
(74) Representative: Müller . Hoffmann & Partner Patentanwälte

(57) **Abstract**

An optical communications system and an optical transceiver used for its communications apparatus designed to realize a single core two-way full duplex type optical transceiver of a simple and low-cost structure which requires no lens, prism and any other similar item. An optical transceiver for communications apparatus which transmits signals via an optical fiber cable comprises a transmitting section, a receiving section, and a multi-core Y-shaped optical divider which is connected to the transmitting section and the receiving section .

## Description

### Cross Reference to Related Application

This application claims priority to Japanese Patent Application No. JP 2000-331399, and the disclosure of those applications is incorporated herein by reference to the extent permitted by law.

### Background of the Invention

### 1. Field of the Invention

The present invention relates to an optical communications system for transmitting blinking of an optical signal as well as the optical signal itself via an optical fiber cable, optical communications apparatus, and an optical transceiver used thereby.

### 2. Description of the Related Art

In recent years, for example, in the field of digital signal transmission, a rapid spread of digital apparatus such as digital VTR and digital audio devices for civil, industrial, and public communications applications, and personal computers gave rise to expanding needs of mutually connecting these apparatus to carry out two-way transmission of mutual digital signals at high speed. To meet these demands, high-speed serial digital communication systems such as the IEEE1394 have been proposed and put into practical use.

Incidentally, in such communications methods, transmission of high-speed digital signals, for example, at 100 Mbit/s or more via a copper wire such as twisted pair may induce radiation of electromagnetic wave noise from this copper wire to cause electromagnetic interference. Also, conversely, there is a possibility that malfunction may possibly occur in response to electromagnetic wave noise released from other digital equipment. To avoid such shortcoming, it is desired to utilize an application of what is known as "optical fiber communications," wherein a digital electric signal is first converted to an optical signal which is then transmitted via optical communications medium such as an optical fiber, to signal transmission between digital apparatus used in civil, industrial and public communications applications.

When optical fiber communications are used in the above-mentioned applications, the ease of laying the optical fiber and lowering of their cost are required, and there are expectations for the application of an acrylic optical fiber cable and other plastic optical fiber cables to optical digital communications for purposes of civil, industrial, and public communications.

Under these circumstances, currently available communications methods using a plastic optical fiber include the use of one way, two-way half duplex, and two-way full duplex optical communications systems. The one-way optical communications system is used only when the digital signal flow is in one way, whereas the two-way half duplex optical communications system is used when it is possible to switch the flow of digital signals alternately. Further, the two-way full duplex optical communications method is employed when it is necessary to carry out transmission and reception of digital signals of mutual equipment simultaneously.

To bring about the two-way full duplex communications, a double core optical transceiver and a single core optical transceiver have so far been proposed. The double-core optical transceiver has a light-emitting device and a photo-detector device disposed independently, its structure being that each of these devices is coupled to a separate optical fiber by a connector so that each is optically coupled to the photo-detector device and the light-emitting device of the optical transceiver of the other station. As a result, the plastic optical fiber cable used is a twisted pair and the connector coupling it to the optical transceiver is of the bipolar structure.

On the other hand, the single core optical transceiver carries out two-way transmission and reception simultaneously with a single core optical fiber cable, its structure being so adapted that its optical sections such as a light-emitting device, a photo-detector device, and a beam splitter are combined in the optical transceiver to have the transmitted signal light to be incident on the optical fiber, while, at the same time, the transmitted signal light is taken out of the same optical fiber. For the connector coupling the optical fiber cable to the optical transceiver, that of the unipolar structure is used.

### Summary of the Invention

In the single core optical transceiver, as mentioned above, one optical fiber cable carries out two-way transmission and reception simultaneously. For this, it is necessary to combine optical sections such as a light-emitting device, a photo-detector device, and a beam splitter in the optical transceiver to have the transmitted signal light to be incident on the optical fiber, while, at the same time, it is necessary to take out the transmitted signal light from the same optical fiber.

For construction of an optical system of this type, it is necessary to mount with fine precision respective sections including the light-emitting device and the photo-detector device, a prism for the beam splitter to perform light distribution, and a lens to have the signal light to be incident on the optical fiber. Further, to reduce signal noise caused by signal light from the light-emitting device reflecting off sections in the light path to become incident on the photo-detector device, the formation of an antireflection coating on the surfaces of lens, prism and any other related item is required.

For the above-mentioned reasons, configuration of a single core transceiver by combining a prism and a lens requires the assembly and surface treatment costs which remain an obstacle to providing an optical transceiver at a price suitable for the targeted apparatus for civil, industrial, and public communications applications. It has been desired to simplify connection of the optical fiber cable to optical communications apparatus which makes up the optical communications system.

The present invention is directed to solving these problems, and it is desired to simplify the construction and to provide an optical communications system and optical communications apparatus, which enable the two-way full duplex communications to be carried out via a single core optical fiber cable, and an optical transceiver therein.

According to an embodiment of the present invention, there is provided an optical communications system which transmits signals via an optical fiber cable among a plurality of communications apparatus. The communications apparatus comprises an optical transceiver having a transmitting section, a receiving section, and an optical distribution element optically connecting the optical fiber to the transmitting section and the receiving section, so as that the two-way full duplex communications may be carried out via a single core optical fiber cable. The optical distribution element may be a Y-shaped optical divider having a multiple-core structure (hereafter it will be called multi-core Y-shaped optical divider).

In the optical communications system according to an embodiment of the present invention, since the communications apparatus which has the optical transceiver with the optical distribution element, especially, the multi-core Y-shaped optical divider, structural simplification in the single core two-way full duplex communications may be accomplished with an added improvement of the signal-to-noise-intensity ratio.

Furthermore, single connector outlet for optical fiber connection on the communications apparatus side may be sufficient.

According to another embodiment of the present invention, there is provided a communications apparatus which transmits signals via an optical fiber cable. The equipment comprises an optical transceiver having a transmitting section, a receiving section and a multi-core Y-shaped optical divider which is connected to the transmitting section and receiving section, so that the two-way full duplex communications may be carried out via a single core optical fiber cable.

Since the communications apparatus according to the another embodiment of the present invention comprises the optical transceiver having the optical distribution element, especially the multi-core Y-shaped optical divider, its construction may be simplified. Further, single connector outlet for optical fiber connection is sufficient.

According to still another embodiment of the present invention, there is provided an optical transceiver for communications apparatus transmitting signals via an optical fiber cable, which includes the transmitting section, the receiving section and the multi-core Y-shaped optical divider which is connected to these transmitting section and receiving section.

In the optical transceiver according to the still another embodiment of the present invention, the optical distribution element, especially the multi-core Y-shaped optical divider, is built in the optical transceiver, thus simplifying its construction. Single connector outlet for optical fiber connection provided on the equipment side is sufficient, hence, one connector on the optical fiber cable side is sufficient. Accordingly, simplifying a connection between the optical fiber cable and the optical transceiver.

### Brief Description of the Drawings

The invention disclosed herein will be understood better with reference to the following drawings of which:
Fig. 1 is a schematic diagram showing an optical transceiver of an embodiment according to the present invention;
Fig. 2 is a schematic diagram showing the state of an optical fiber cable being connected to an optical transceiver of an embodiment according to the present invention;
Fig. 3 A is a sectional view of an optical distribution element used for an embodiment of the present invention;
Fig. 3B is a diagram, partially broken away, showing the construction of an optical distribution element used for an embodiment of the present invention;
Fig. 4 is a diagram showing the configuration of a measurement system when the optical property of an optical transceiver according to an embodiment of the present invention is measured; and
Fig. 5 is a schematic diagram showing the configuration of an optical communications system of an embodiment according to the present invention.

### Description of the Preferred Embodiment

An optical communications system according to an embodiment of the present invention is an optical communications system for transmitting the blinking of an optical signal as well as transmitting the signal itself via an optical fiber cable. The communications apparatus comprises an optical transceiver which internally includes a transmitting section having an electricity-to-light transforming device (electricity-to-light transducer) and a transmitting circuit, a receiving section having an light-to-electricity transforming device (photoelectric transducer) and a receiving circuit, and a light conducting type optical distribution element connected to the transmitting section and the receiving section, so as to carry out the two-way duplex communications between the communications apparatus of a plurality of stations via a single core fiber cable.

The optical transceiver may include an electricity-to-light transducer such as a light-emitting device converting electric signals into optical signals, an photoelectric transducer such as a photo-detector converting optical signals transmitted from the other station into electric signals, and a light conducting type optical distribution element for optically coupling these light-emitting device and photo-detector to a single core optical fiber cable.

The light guiding type optical distribution element may comprise a plurality of cores, and preferably be a multi-core Y-shaped optical divider. A structure of the light guiding type optical distribution element is not limited to the multi-core Y shaped structure, and may be a different structure providing that the light guiding type optical distribution element can establish optical couplings of the optical fiber to be connected with the optical transceiver with the transmitting section and the receiving section is accomplished.

In many cases, there is a need to construct a single core optical transceiver capable of having optical signals of the light-emitting device to be incident on the optical fiber or received optical signals that can be incident on the photo-detector by combining optical devices such as a beam splitter and lens. However, to fabricate a single core optical transceiver in this manner called for forming of an antireflection coating or a similar covering on the surface of each optical device such as the lens and the prism. Furthermore, it is required to mount each optical device with fine precision.

On the other hand, in an embodiment of the present invention, together with the light-emitting device and the photo-detector, the light conducting type optical distribution element is built in to constitute a single core optical transceiver, so as that a number of sections thereof is reduced and the formation of the antireflection coating and fine-precision mounting as mentioned above are not required, while the structure is simplified thus to make it possible to provide a low-cost optical transceiver for optical digital communications suitable for civil, industrial, and public communications applications, communications apparatus, and optical communications system based on use thereof

Next, an embodiment of the present invention will be described with reference to drawings.

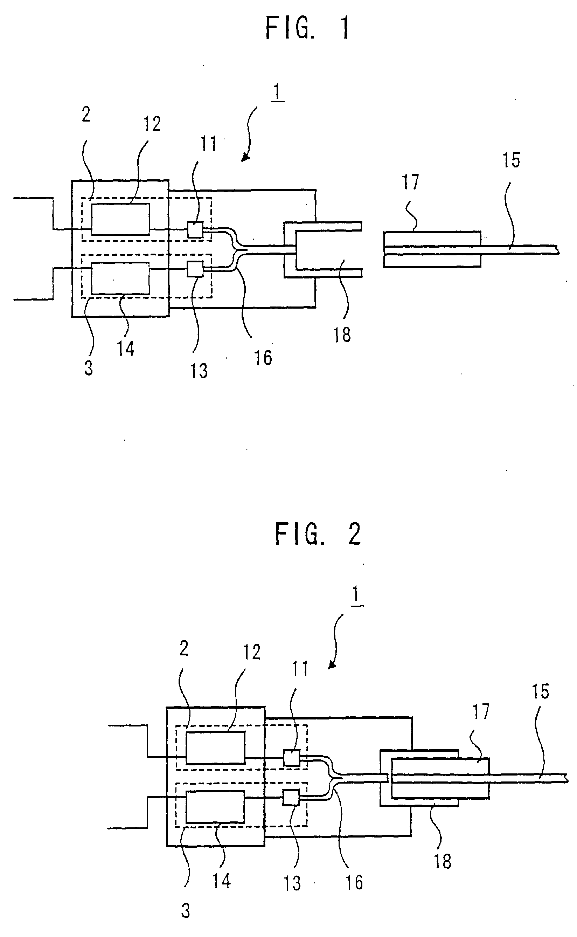

First, an optical transceiver according to the present embodiment, that is, an optical transceiver used for a communications apparatus of an optical communications system, will now be described. As shown in Fig. 1, the optical transceiver of the present embodiment comprises a transmitting section 2 having a device for converting electric signals to optical signals, for example, a light-emitting device 11 including a light-emitting diode and an electric circuit 12 which drives the light-emitting device 11, a receiving section 3 having a device for converting optical signals to electric signals, for example, a photo-detector 13 including a photodiode or a similar device and an electric circuit 14 which amplifies electric signals of the photo-detector 13, and a light conducting type optical distribution element (light conducting type optical divider) 16 for coupling the light-emitting device 11 and the photo-detector 13 to an optical fiber cable, that is, a single core optical fiber cable 15 which connects between communications apparatus disposed in both stations.

An outlet 18 is provided on the optical transceiver, and a connector 17 of the single core optical fiber cable 15 is plugged into the outlet 18 (see Fig. 2).

To give a specific example, a light-emitting diode with a center wavelength of approximately 650 nm is used as the light-emitting device 11, and a silicon PIN-type photodiode is used as the photo-detector 13. Also, an acrylic plastic optical fiber cable with a total diameter of 1000 µm including a core portion with a diameter of 980 µm and a cladding layer may be used as the optical fiber cable 15.

For the light conducting type optical distribution element, an optical distribution element which is formed by shaping a multi-core optical fiber cable into Y may be used. The optical transceiver 1 is so constructed that one end of a two-way branch of the light conducting type optical distribution element is coupled to the light-emitting device 11, while the other end thereof is coupled to the photo-detector 13, an end of its stem side facing the outlet 18.

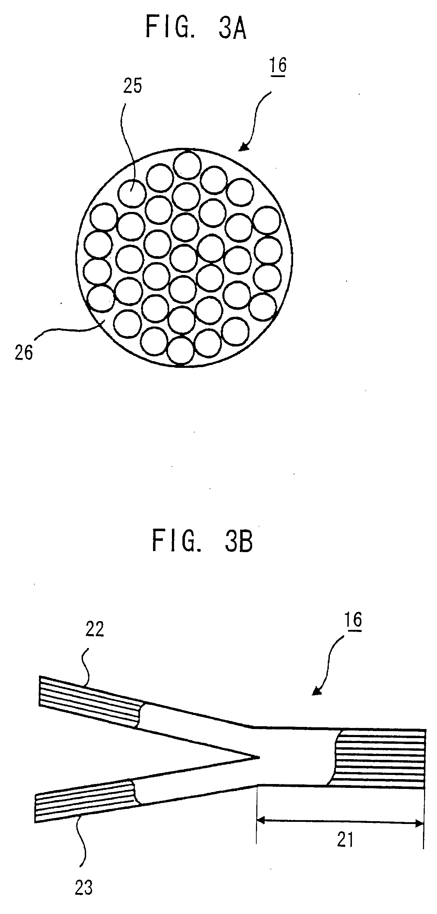

Fig. 3 shows an example of the light conducting type optical distribution element 16 used in an embodiment of the present invention. As shown in Fig. 3A, for an optical fiber, what is called a "multi-core fiber" is used as the light conducting type optical distribution element 16. The optical fiber 16 is composed so as that a multiplicity of core materials (so-called "core") 25 for propagating light are bundled up therein, spaces between the core materials 25 being filled up with cladding material (so-called "cladding") 26 having a refractive index difference in a manner of separating each core material. By means of this structure, each core in the optical fiber 16 is made to propagate light. Further, the optical fiber 16 is formed in the Y shape so that one end of the multi-core fiber is split into two ways in the radial direction (Fig. 3B).

As a specific example of the light conducting type optical distribution element 16, an acrylic multi-core fiber with a core diameter of approximately 50 µm each, the number of cores 500, and an outer diameter of 1000 µm is processed and prepared. One end of the multi-core fiber approximately 1.5 cm long is cut by knife in the length direction for about 1 cm in a manner of splitting two ways in the radial direction, and the Y shape is formed as shown in Fig. 3B. Through this configuration, signal light incident from the entire face of the stem 21 is distributed to two branch sections 22 and 23 and conducted, while signal light incident from the other branch section 22 or branch section 23 is conducted to the stem 21.

For another example of the light conducting type distribution element 16, it is possible to process and fabricate a double core fiber into the Y shape.

According to the optical transceiver 1 of the present embodiment, it is possible to built in with the Y-shaped light guide optical distribution element 16 consisting essentially of a multi-core fiber. Accordingly, there is no need of installing lenses, prisms or the like, nor adjusting the light axis of each optical section, nor mounting each optical section with fine precision. Further, it can also be made up in a simple structure. Namely, it is possible to bring about an optical transceiver of the single core full two-way duplex communications type in a simple and low-cost construction without requiring a lens, a prism or any other related optical item.

Since the Y-shaped light guiding type optical distribution element 16 comprises a multi-core fiber, for example, when signal light from the light-emitting device 11 is incident on the other branch section 22, even if this signal light should reflect the coupled section between the light guiding type optical distribution element 16 and the optical fiber cable 15, the reflected light will not be incident on the other branch section 23 side. Consequently, any reflection of signal light from the light-emitting device 11 reflecting from the coupled section of the optical fiber cable 25 and the signal light from the communications apparatus of the other station being transmitted via the same optical fiber cable 15 will not be mixed, and such a mixed signal will not be incident on the photo-detector 13.

Because single outlet 18 in the optical transceiver 1 is sufficient for the connector 17 to connect to the optical fiber cable 15, it is well suited to applications of communications apparatus where not many number of connector outlets can be provided (for instance, including digital apparatus such as digital video cameras and minidisk players).

In optical digital communications, the signal-to-noise-intensity ratio necessary for securing the bit error rate (1E-12) is calculated to be approximately 23.0 dB or more when the signal waveform is approximated into a Gaussian distribution. In the single core two-way full duplex communications according to the present invention, retrogressive optical noise is considered to be more dominant than equipment noise such as thermal noise. Accordingly, it is necessary for a signal optical intensity to be sufficiently higher than the retrogressive light level so as to reach the receiver.

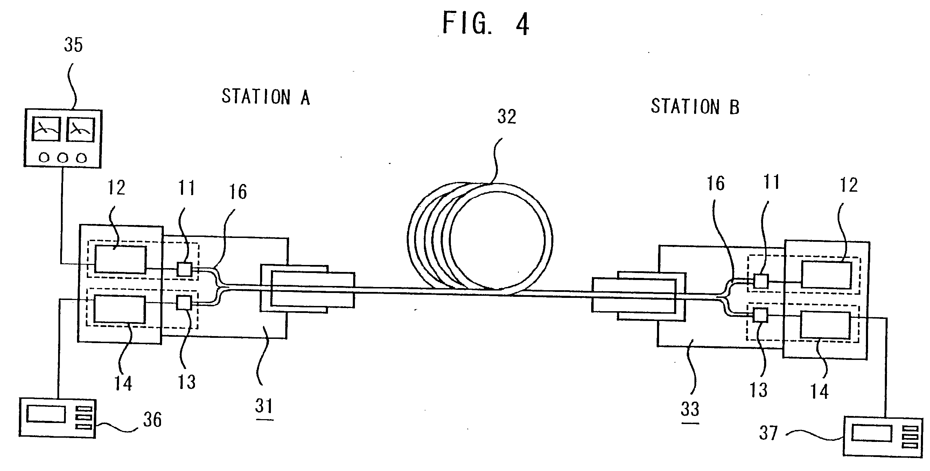

An optical transceiver prepared in accordance with the present embodiment is used to measure its optical signal property according to the configuration shown in Fig. 4. After light is emitted at a predetermined intensity from the light-emitting diode 11 on the transmitting side of an optical transceiver 31 on a station A side, the signal light is transmitted to an optical transceiver 33 on a station B side via a 5m-long optical fiber cable 32 for transmission. In this configuration, the light-emitting diode 11 on the station B side is so arranged that it did not emit light and that only the intensity of receiving light is measured. In such a procedure, the stray optical noise intensity and the intensity of arriving signal of the optical transceiver of an embodiment are measured. It must be mentioned that 35 represents a constant-current power supply connected to the electric circuit 12 which drives the light-emitting diode 11 on the station A side, while 36 and 37 respectively represent the optical power meters connected to electric circuits 14 which amplify the electric signals of photodiodes 11 on the Stations A side and the Station B side.

When the released optical intensity from the light-emitting diode 11 on the Station A side is set at approximately -14.0 dBm by adjusting the constant-current power supply 35, the retrogressive optical noise intensity detected by the photodiode 13 on the Station A side is approximately -39.6 dBm and an arriving signal intensity of approximately -27.9 dBm is detected by the photodiode on the Station B side. Consequently, as the ratio of signal light to noise optical intensity, a performance of approximately 11.7 dB is achieved. When this optical intensity ratio is converted to the voltage output ratio, approximately 23.4 dB is obtained. It is clear that by using the optical transceiver of the present embodiment, it is fully possible to conduct single core full duplex digital optical communications at a bit error rate of 1E-12.

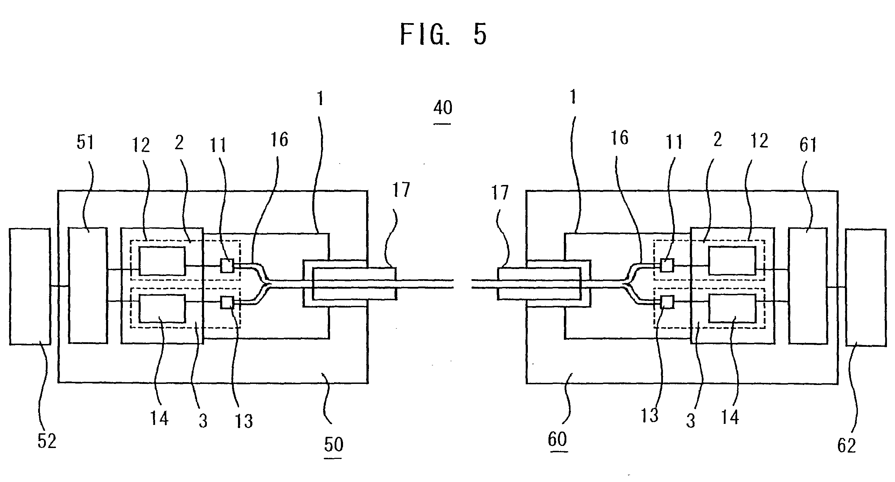

Fig. 5 shows an optical communications system of the present invention, namely, an embodiment of the optical communications system provided with the above-mentioned optical transceiver 1.

An optical communications system 40 in accordance with an embodiment of present invention comprises a plurality of communications apparatus, for example, communications apparatus 50 on one side and communications apparatus 60 on the other side, with a single core optical fiber cable 41 connecting both communications apparatus 50 and 60, so as to perform the two-way full duplex communications via an optical fiber cable 41.

The communications apparatus 50 on one side comprises the optical transceiver 1 including the transmitting section 2 having the light-emitting device 11 converting electric signals to optical signals and the electric circuit 12 driving the light-emitting device 11, the receiving section 3 having the photo-detector 13 converting optical signals to electric signals and the electric circuit 14 amplifying its electric signals, and the light conducting type optical distribution element 16. The transmitting section 2, the receiving section 3 and the light conducting type optical distribution element 16 are integrally built-in the optical transceiver 1. Furthermore, the communications apparatus 50 comprises a control circuit 51 which acts as a bridge of electric signals with digital equipment 51 to control the transmitting section 2 and the receiving section 3.

The communications apparatus 60 on the other side likewise comprises the optical transceiver 1 including the integrally built-in the transmitting section 2 having the light-emitting device 11 converting electric signals to optical signals and the electric circuit 12 driving the light emitting device 11, the receiving section 3 having the photo-detector 13 converting optical signals to electric signals and the electric circuit 14 amplifying its electric signals, and the light conducting type optical distribution element 16, with the further provision of a control circuit 61 which acts as a bridge of electric signals with the digital equipment 51 to control the transmitting section 2 and the receiving section 3.

A connector 17 is attached respectively to both ends of the optical fiber cable 41, and the connector 17 is plugged in the outlet 18 of the respective optical transceivers 1 in both communications apparatus 50 and 60 thus to be coupled to each of the transmitting section 2 and receiving section 3 via the light conducting type optical distribution element 16.

Optical transmission of the optical communications system 40 of the present embodiment is carried out as follows.

First, with regards to optical transmission from the communications apparatus 50 on one side, the transmitting section 2 is subjected to drive control by the control circuit 51 of the communications apparatus 50, and the light-emitting device 11 is operated by the electric circuit 12 to generate an optical signal which is incident on the optical fiber cable 41 via one branch section of the light conducting type optical distribution element 16.

This optical signal from the end of the other side of the optical fiber cable 41 being incident on the light conducting type optical distribution element 16 of the communications apparatus 60 on the other side is distributed to be incident on the photo detector 13 of the receiving section 3, then the detected light signal is converted to an electrical signal in the receiving section 3 and outputted.

Likewise, an optical signal from the transmitting section 2 of the communications apparatus 60 on the other side via the light conducting type optical distribution element 16 being incident on the optical fiber cable 41 is distributed via the light conducting type optical distribution element 16 of the communications apparatus on one side to be incident on the photo-detector 13, then the detected light signal is converted to an electric signal in the receiving section 3 and outputted.

In this manner, the two-way full duplex optical communications between the communications apparatus 50 on one side and the communications apparatus 60 on the other side is performed.

According to the optical communications system 40 in accordance with the present embodiment, the signal-to-noise-intensity ratio may be improved in single core two-way full duplex communications, while, at the same time, the entire construction including the communications apparatus 50 and 60 and connection of the optical fiber cable 41 may be simplified.

Namely, since each of the communications apparatus 50 and 60 is provided with an optical transceiver having the built-in, multi-core Y-shaped light conducting type optical distribution element 16, the equipment structure can be simplified. Also, because only one connector outlet 18 for connecting the optical fiber cable 41 suffices, it is possible to simplify handling such as connection of the optical fiber cable 41 to the communications apparatus 50 and 60.

According to the present invention, the optical transceiver may be constructed in a simple structure since the optical transceiver is provided with built-in sections of the transmitting section, the receiving section, and the optical distribution element (optical divider), especially, the multi-core Y-shaped optical divider. This feature makes it possible to produce an optical transceiver of single core full two-way duplex communications marked by the simple and low-cost structure.

According to the present embodiment, there is a further advantage of simplification of handling such as connection of the optical fiber cable to the communications apparatus as well as simplification in the equipment structure.

According to the present invention, improvement of the signal-to-noise-intensity ratio in single core two-way fully duplex communications in the communication system may be accomplished in addition to a benefit of simplification in the overall construction including connection of an optical fiber cable to the communications apparatus.

Although the invention has been described in its preferred form with a certain degree of particularity, obviously many changes and variations are possible therein. It is therefore to be understood that any modifications will be practiced otherwise than as specifically described herein without departing from the scope of the present invention.

## Claims

1. An optical communications system transmitting signals via an optical fiber cable between a plurality of communications apparatus, said communications apparatus comprising:
an optical transceiver including a transmitting section, a receiving section, and a multi-core Y-shaped optical divider which is connected to said transmitting section and said receiving section, wherein
a two-way full duplex communications is carried out via a single core optical fiber cable.

2. An optical communications apparatus transmitting signals via an optical fiber cable, comprising:
an optical transceiver including a transmitting section, a receiving section, and a multi-core Y-shaped optical divider which is connected to said transmitting section and said receiving section, wherein
a two-way full duplex communications are carried out via a single core optical fiber cable.

3. An optical transceiver for communications apparatus transmitting signals via an optical fiber cable, comprising:
a transmitting section,
a receiving section, and
a multi-core Y-shaped optical divider which is connected to said transmitting section and said receiving section.

4. The optical transceiver claimed in claim 3, wherein:
said transmitting section, said receiving section, and said Y-shaped optical divider are internally disposed in said optical transceiver.

5. An optical transceiver for communications apparatus transmitting signals via an optical fiber cable, comprising:
a transmitting section,
a receiving section, and
an optical distribution element providing optical coupling of said optical fiber with said transmitting section and said receiving section, wherein
said transmitting section, said receiving section, and said optical distribution element are disposed inside said optical transceiver.

6. An optical transceiver for communications apparatus transmitting signals via an optical fiber cable, comprising:
means for transmitting a light signal,
means for receiving a light signal, and
means for optically coupling said means for transmitting a light signal and said means for receiving a light signal with said optical fiber cable.
